(19) Europäisches Patentamt
European Patent Office
Office européen des brevets

(11) **EP 2 914 391 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(21) Anmeldenummer: **13785456.8**

(22) Anmeldetag: **30.10.2013**

(51) Int Cl.:
***B21C 23/24*** *(2006.01)*      ***B32B 15/01*** *(2006.01)*
***C22C 21/00*** *(2006.01)*

(86) Internationale Anmeldenummer:
**PCT/EP2013/072744**

(87) Internationale Veröffentlichungsnummer:
**WO 2014/068015 (08.05.2014 Gazette 2014/19)**

(54) **ALUMINIUMVERBUNDWERKSTOFF UND VERFAHREN ZUR UMFORMUNG**

ALUMINUM COMPOSITE MATERIAL AND FORMING METHOD

MATÉRIAU COMPOSITE À BASE D'ALUMINIUM ET PROCÉDÉ DE FAÇONNAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2012   EP 12190672**

(43) Veröffentlichungstag der Anmeldung:
**09.09.2015   Patentblatt 2015/37**

(73) Patentinhaber: **Hydro Aluminium Rolled Products GmbH**
**41515 Grevenbroich (DE)**

(72) Erfinder:
• **BRINKMAN, Henk-Jan**
  **53175 Bonn (DE)**
• **KELLER, Stefan**
  **53125 Bonn (DE)**
• **ENGLER, Olaf**
  **53229 Bonn (DE)**
• **HÖRSTER, Natalie**
  **50859 Köln (DE)**
• **SCHRÖDER, Dietmar**
  **41515 Grevenbroich (DE)**
• **ARETZ, Holger**
  **53508 Mayschoß (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

(56) Entgegenhaltungen:
**EP-A1- 1 852 251      EP-A1- 2 156 945**
**FR-A1- 2 922 222      US-B1- 6 224 992**

**Beschreibung**

Die Erfindung betrifft ein Verfahren zum Umformen eines Bleches aus einem Aluminiumverbundwerkstoff, welcher eine Aluminiumkernlegierung vom Typ AlMg6 oder AA6xxx und mindestens eine ein- oder beidseitig vorgesehene, äußere Aluminiumlegierungsschicht aufweist, wobei der Aluminiumverbundwerkstoff in einem Umformwerkzeug umgeformt wird und die ein- oder beidseitige äußere Aluminiumlegierungsschicht eine Dehngrenze $R_{p0,2}$ im weich- oder lösungsgeglühten Zustand von 25 MPa bis 60 MPa aufweist. Daneben betrifft die Erfindung eine Verwendung des Aluminiumverbundwerkstoffes in einem entsprechenden Umformverfahren sowie ein tief- oder streckgezogenes Strukturteil oder Außenhautteil eines Kraftfahrzeugs umgeformt mit einem erfindungsgemäßen Verfahren.

Blechwerkstoffe aus AA6xxx-Aluminiumlegierungen werden im Automobil in der Karosserie und für Karosserieanbauteile (Türen, Klappen, Hauben usw.) eingesetzt. Die üblicherweise eingesetzten Legierungen, wie beispielsweise AA6016 oder AA6014 zeigen sowohl eine gute Umformbarkeit im Anlieferzustand (T4) als auch eine signifikante Festigkeitssteigerung nach dem Lackeinbrennzyklus, beispielsweise bei einer kathodischen Tauchlackierung. Im Zustand T4 ist der Blechwerkstoff lösungsgeglüht. Für Bauteile im Sichtbereich, die sogenannten Außenhautteile, ist eine gute Oberflächenanmutung, d.h. eine roping-arme bzw. roping-freie Qualität eine weitere Voraussetzung, dass die Aluminiumlegierungen eingesetzt werden.

Für Bauteile mit hohen Anforderungen an die Umformbarkeit sind im Markt Aluminiumwerkstoffe verfügbar, welche bezüglich der Umformbarkeit optimiert sind und gleichzeitig für Außenhautteile eingesetzt werden können. Allerdings können auch diese bezüglich der Umformbarkeit optimierten Bleche neue Anforderungen an die Umformbarkeit nicht lösen. Derzeit werden aufgrund des Gewichtseinsparpotenzials von Aluminium Aluminiumlösungen für Außenhautbauteile gesucht, welche bisher aus Aluminium nicht gefertigt werden konnten. Beispielsweise sollen großflächige Seitenwandteile eines Kraftfahrzeugs als einteiliges Bauteil aus einem einzigen Aluminiumlegierungsblech hergestellt werden. Derart großflächige Blechteile konnten aufgrund der begrenzten Umformbarkeit der Aluminiumwerkstoffe bisher nicht produziert werden. Aufgrund der fehlenden Aluminiumlösungen werden diese großflächigen Karosseriebauteile entweder aus Stahl hergestellt oder das Bauteil wird als mehrteiliges Aluminiumbauteil ausgelegt, was zu einem erhöhten Aufwand in der Herstellung durch zusätzliche Fügeschritte führt.

Die Anmelderin hat einen Werkstoff entwickelt, welcher sehr hohe Anforderungen an die Umformbarkeit erfüllt und sich durch hohe Dehnungswerte im Zustand T4 auszeichnet. Dieser Aluminiumverbundwerkstoff wurde bereits in der internationalen Patentanmeldung WO 2013/037918 A1 genannt. Das Herstellverfahren des Werkstoffes zielt zwar auf eine maximale Umformbarkeit des Werkstoffes ab, allerdings waren in der Praxis Roping-Effekte sichtbar, die herstellungsbedingt sind.

Aus der US 6,224,992 B1 ist ein Karosserieteil für ein Kraftfahrzeug aus einem Verbundwerkstoff bekannt. Ein Kernmaterial aus einer Aluminiumlegierung des Typs AA5xxx ist hierbei mit einer äußeren Schicht aus einem weicheren Material versehen, beispielsweise einer Aluminiumlegierung des Typs AA1xxx.

Aufgabe der vorliegenden Erfindung ist es, die Formgebungsgrenzen von Aluminiumlegierungen, insbesondere die Formgebungsgrenzen für den Kraftfahrzeugbau interessanter AA6xxx und AA5xxx Aluminiumlegierungen zu erweitern und ein Umformverfahren bereitzustellen, welches die Herstellung von großflächigen, stark umgeformten Aluminiumlegierungsblechteilen insbesondere auch in Außenhautqualität ermöglicht. Daneben soll eine Verwendung eines Aluminiumverbundwerkstoffs vorgeschlagen werden und entsprechend hergestellte Blechteile bereitgestellt werden.

Gemäß einer ersten Lehre der vorliegenden Erfindung wird die aufgezeigte Aufgabe durch ein Verfahren zum Umformen eines Blechs aus einem Aluminiumverbundwerkstoff dadurch gelöst, dass für die Fließspannungen der Aluminiumlegierungen des Kerns und der mindestens einen äußeren Schicht im weichgeglühten oder lösungsgeglühten Zustand gilt:

$k_{f,Außen}/k_{f,Kern} < 0,5$, bevorzugt $k_{f,Außen}/k_{f,Kern} < 0,4$,

während der Umformung des Aluminiumverbundwerkstoffs an mindestens einer lokalen Position im Umformwerkzeug die Reibschubspannung $\tau_R$ zwischen dem Werkzeug und Aluminiumverbundwerkstoff in der Kontaktfläche die Schubfließspannung $k_{Außen}$ der äußeren Aluminiumlegierungsschicht erreicht wird und die Umformung einen Tief- und/oder Streckziehprozess umfasst, wobei als Aluminiumkernlegierung eine Legierung vom Typ AA6xxx und als mindestens eine äußere Aluminiumlegierungsschicht eine Aluminiumlegierung vom Typ AA8xxx verwendet wird oder als Aluminiumkernlegierung eine Legierung vom Typ AlMg6 und als mindestens eine äußere Aluminiumlegierungsschicht eine Aluminiumlegierung vom Typ AA8079, AA1050, AA5005, AA5005A verwendet wird.

Gemäß dem Coulomb'schen Reibgesetz gilt für die Reibschubspannung in der Kontaktfläche zwischen Umformwerkzeug und der äußeren Aluminiumschicht des Aluminiumverbundwerkstoffes:

$$|\tau_R| = \min(k, \mu \cdot |p_N|) \tag{1}$$

wobei $\tau_R$ die Reibschubspannung, $\mu$ der Reibungskoeffizient und $p_N$ der Kontaktnormaldruck bzw. die Flächenpressung, welche die Reibung erzeugt, und k die Schubfließspannung der weicheren äußeren Schicht des Aluminiumverbundwerkstoffes darstellt.

Mit der genannten Funktion (1) ergeben sich für den Absolutbetrag der Reibschubspannung zwei Bereiche:

1.) $\tau_R = \mu \cdot |p_N|$ mit: $\mu \cdot |p_N| < k$ und
2.) $\tau_R = k$ mit $\mu \cdot |p_N| \geq k$.

Im einfachsten Fall bleibt $\mu$ über die Umformung hin konstant, so dass bei steigender Flächenpressung die Reibschubspannung $\tau_R$ linear ansteigt. Erreicht $\tau_R$ jedoch die Schubfließspannung k des mit dem Umformwerkzeug in Kontakt stehenden Werkstoffes, so wird die Reibschubspannung auf die Schubfließspannung k begrenzt.

Für die Schubfließspannung k und die Fließspannung $k_f$ eines umzuformenden Werkstoffes gilt nun gemäß der Theorie nach von Mises:

$$k = k_f/\sqrt{3},$$

wobei $k_f$ bei 0,2% plastischer Dehnung der im Zugversuch ermittelten Dehngrenze $R_{p0,2}$ entspricht.

Mit dem Umformwerkzeug in Kontakt steht die äußere, weiche Aluminiumlegierungsschicht, deren Fließspannung $k_{f,Außen}$ und damit auch deren Schubfließspannung $k_{Außen}$ deutlich geringer ist als die der Aluminiumkernlegierung $k_{f,Kern}$. Für die Reibschubspannung im Kontakt zwischen Umformwerkzeug und Aluminiumverbundwerkstoff während der Umformung gilt somit zumindest an einer lokalen Position:

$$\tau_R = k_{Außen}.$$

Hieraus wird deutlich, dass je kleiner der Wert $k_{Außen}$ der Schubfließspannung, respektive der Fließspannung $k_{f,Außen}$ der äußeren Aluminiumlegierungsschicht ist, desto geringer ist die der Bewegungsrichtung des Werkstoffes entgegengesetzte Reibkraft im Werkzeug. Im Ergebnis kann das Blech aus dem Aluminiumverbundwerkstoff in diesem Fall leichter beispielsweise in ein Tiefziehwerkzeug hineingezogen werden. Dies gilt auch für einseitig mit einer äußeren Aluminiumlegierungsschicht versehene Aluminiumverbundwerkstoffe, sofern die weichere, äußere Aluminiumlegierungsschicht im Wesentlichen im Kontakt mit dem Umformwerkzeug steht.

Es wurde herausgefunden, dass die beanspruchte Werkstoffkombination bestehend aus einer Aluminiumlegierung vom Typ AlMg6 oder AA6xxx für die Kernlegierung und einer ein- oder beidseitig vorgesehenen, weichen Aluminiumlegierungsschicht, welche ein Fließspannungsverhältnis zur Kernlegierung von kleiner als 0,5, bevorzugt kleiner als 0,4, aufweist, es ermöglichen, dass während der Umformung des Aluminiumverbundwerkstoffs an mindestens einer lokalen Position die Reibschubspannung $\tau_R$ im Aluminiumverbundwerkstoff die Schubfließspannung $k_{Außen}$ der äußeren Aluminiumlegierungsschicht erreicht und diese dort begrenzt. Hiermit wird im Vergleich mit einem monolithischen Blech aus der Kernlegierung eine deutlich verbesserte Umformbarkeit des Aluminiumverbundwerkstoffs erreicht.

Anders als in der eigenen WO 2013/037918 A1 wird ein vollständig neuer Weg beschritten, da die vorliegende Erfindung die Beeinflussung der Reibschubspannung beim Umformen zur Erzielung der Umformgrade mit in die technische Lehre einschließt. Entgegen der bisherigen Vorgehensweise wird dabei der Effekt genutzt, dass die Reibschubspannung durch die Schubfließspannung der weicheren, äußeren Aluminiumlegierungsschicht begrenzt wird.

In umformtechnischen Versuchen mit einem Kreuzwerkzeug im Labormaßstab zeigte sich, dass die Niederhalterkräfte bei identischer Werkzeuggeometrie und vergleichbaren Schmierbedingungen um mindestens den Faktor 2,6 gesteigert werden konnten, sofern das oben genannte Verhältnis der Fließspannung $k_{f,Außen}/k_{f,Kern}$ der beteiligten Aluminiumlegierungen eingehalten wird. Die höhere mögliche Niederhalterkraft in den Kreuzwerkzeugversuchen lässt auf eine deutlich verbesserte Umformbarkeit der entsprechenden Aluminiumverbundwerkstoffe, insbesondere bei einem Tiefziehprozess, schließen. Da die Schubfließspannung der weicheren äußeren Schicht im Vergleich zur Schubfließspannung der Aluminiumkernlegierung relativ niedrig ist, wird die Reibschubspannung beim Umformen signifikant reduziert, was ein größeres Prozessfenster ermöglicht. Dies eröffnet die Möglichkeit, beispielsweise eine einteilige Seitenwand eines Kraftfahrzeugs aus Aluminium in Außenhautqualität mit einer AA6xxx-Aluminiumlegierung herstellen zu können, wodurch sich ein großes Kosteneinsparpotenzial gegenüber einer mehrteiligen Aluminiumlösung ergibt.

Gleiches gilt auch für die im Wesentlichen bei Innenteilen und Strukturteilen eingesetzten AlMg-Aluminiumkernlegierungen vom Typ AlMg6, so dass auch großflächige Innenteile und Strukturteile, welche hohe Umformgrade erfordern, hergestellt werden können.

Die Umformung umfasst einen Tief- und/oder Streckziehprozess. Bei diesen Umformprozessen erschwert die Reibschubspannung $\tau_R$ die Relativbewegung zwischen Blechwerkstoff und Umformwerkzeug. Wie bereits zuvor ausgeführt, führt die Begrenzung der Reibschubspannung $\tau_R$ auf die niedrigen Werte der Schubfließspannung $k_{Außen}$ der weicheren, äußeren Aluminiumlegierungsschicht zu einem verbesserten Tief- bzw. Streckziehverhalten. Damit können deutlich höhere Umformgrade erzielt werden, da der Werkstoff mit geringeren Kräften in das formgebende Umformwerkzeug gezogen werden kann.

Weist gemäß einer weiteren Ausführungsform des erfindungsgemäßen Verfahrens die mindestens eine äußere Aluminiumlegierungsschicht vorzugsweise 5 % bis 15 % der Dicke des gesamten Aluminiumverbundwerkstoffes auf, so kann der technische Effekt des erfindungsgemäßen Verfahrens genutzt werden, ohne dass die Festigkeit des Aluminiumverbundwerkstoffs durch die äußeren Schichten und deren Anteil an der Gesamtdicke des Aluminiumverbundwerkstoffs zu sehr reduziert wird.

Bevorzugt wird die Reibschubspannung $\tau_R$ während der Umformung durch eine Erhöhung der Flächenpressung vergrößert, bis diese die Schubfließspannung $k_{Außen}$ der äußeren Aluminiumlegierungsschicht an mindestens einer lokalen Position im Umformwerkzeug erreicht. Im Gegensatz zu den bisherigen Umformverfahren, bei welchen die Flächenpressung typischerweise gerade so groß gewählt wird, dass keine Faltenbildung im Werkzeug auftritt, kann die Flächenpressung beispielsweise vergrößert werden, um den vorteilhaften Effekt des Aluminiumverbundwerkstoffs in Bezug auf die Erweiterung der Formgebungsgrenzen zu erreichen. Weiterhin ist denkbar, dass Verbundwerkstoffe mit einer kostengünstigeren Oberflächentopographie mit höheren Reibwerten dennoch erfolgreich umgeformt werden können. Eine kostengünstigere Oberflächentopographie kann beispielsweise durch eine "Mill-Finish" Oberflächentopographie des Blechs bereitgestellt werden, welche gegenüber der bei großen Umformgraden üblicherweise vorgesehenen Schmiermitteltaschen aufweisenden Topographie einen Arbeitsschritt in Form eines zusätzlichen Walzschrittes zum Aufbringen der speziellen Topographie einspart.

Besonders gute Umformergebnisse wurden gemäß einer weiteren Ausgestaltung des Verfahrens dadurch erreicht, dass die Aluminiumlegierung vom Typ AA6xxx im lösungsgeglühten Zustand oder AlMg6 im weichen Zustand eine Gleichmaßdehnung $A_g$ von mindestens 20 %, bevorzugt mindestens 22 % aufweist. Beispiele hierfür sind Aluminiumlegierungen vom Typ AA6016 im Zustand T4 oder die Aluminiumlegierung AA5182 im Zustand O.

Als Werkstoffe für die Aluminiumkernlegierungen kommen weiterhin Aluminiumlegierungen vom Typ AA6xxx mit einer Bruchdehnung $A_{80mm}$ von mindestens 24%, bevorzugt mindestens 26% quer zur Walzrichtung in Frage. Sie eignen sich in einer ropingfreien oder -armen Ausführung insbesondere auch für Außenhautbauteile eines Kraftfahrzeugs mit Sichtanforderungen für die Oberflächenanmutung.

Daneben kommen für Strukturteile, welche keine sichtbaren Bauteile eines Fahrzeugs bilden, also beispielsweise Rahmenkonstruktionen, Türinnenteile, Verbundlenker etc. auch AlMg-Aluminiumkernlegierungen vom Typ AlMg6 mit einer Gleichmaßdehnung $A_g$ von mindestens 21 %, bevorzugt mindestens 22 %, sowie einer Bruchdehnung $A_{80mm}$ von mindestens 25%, bevorzugt mindestens 26% quer zur Walzrichtung in Frage.

Die zuvor genannten Aluminiumkernlegierungen kombinieren sehr hohe Festigkeiten mit einem bereits sehr guten Umformvermögen, das mit dem erfindungsgemäßen Verfahren noch einmal deutlich gesteigert werden kann.

Wird als Aluminiumlegierung eine Legierung vom Typ AA6xxx und als mindestens eine äußere Aluminiumlegierungsschicht eine Aluminiumlegierung vom Typ AA8xxx verwendet oder als Aluminiumkernlegierung eine Legierung vom Typ AlMg6 und mindestens eine äußere Aluminiumlegierungsschicht eine Aluminiumlegierung von Typ AA8079, AA1050, AA5005, AA5005A verwendet, so können mit etablierten Legierungen Aluminiumverbundwerkstoffe hergestellt werden, welche extrem gute Umformeigenschaften aufweisen.

In einer besonders bevorzugten Ausführung ist die Aluminiumkernlegierung eine Legierung vom Typ AA6016 und die mindestens eine äußere Legierungsschicht eine Legierung vom Typ AA8079. Diese Kombination lässt in den oben erwähnten Kreuzwerkzeugversuchen eine Niederhalterkraft zu, welche die der monolithischen Variante AA6016 um mehr als den Faktor 10 übersteigt. Diese verbesserten Umformeigenschaften werden im Kreuzwerkzeug nicht nur bei einer Erhöhung der Niederhalterkraft, sondern auch bei einem vergrößerten Rondendurchmesser erreicht.

Wird ein Aluminiumverbundwerkstoff mit einer Aluminiumkernlegierung vom Typ AA6xxx gemäß einer weiteren Ausgestaltung des Verfahrens umgeformt, welcher eine Dicke von 0,5 mm bis 2,0 mm, bevorzugt 0,8 mm bis 1,5 mm aufweist, können die im Kraftfahrzeugbau auftretenden Festigkeitsanforderungen für Außenhautteile zusammen mit den gesteigerten Anforderungen an die Umformbarkeit erfüllt werden.

Gleiches gilt auch für eine Aluminiumkernlegierung vom Typ AlMg6 und mindestens einer äußeren Aluminiumlegierungsschicht vom Typ AA1050 oder AA5005 oder AA5005A. Bei allen genannten Legierungskombinationen ist sowohl das Fließspannungsverhältnis $k_{f,Außen}/k_{f,Kern} < 0{,}5$.

Wird ein Aluminiumverbundwerkstoff mit einer Kernlegierung vom Typ AlMg6 gemäß einer weiteren Ausgestaltung des Verfahrens umgeformt, welcher eine Dicke von 0,5 mm bis 3,5 mm, bevorzugt 1,0 mm bis 2,5 mm aufweist, können die für Strukturbauteile gestellten Festigkeitsanforderungen bei gleichzeitig verbesserter Umformbarkeit erfüllt werden.

Bei der Herstellung des Aluminiumlegierungsverbundwerkstoffs kann sowohl ein Walzplattieren als auch ein simultanes Gießen verwendet werden. Beim Walzplattieren wird zunächst ein Walzbarren aus dem Aluminiumkernlegierungswerkstoff gegossen und homogenisiert. Anschließend wird/werden die Auflage(n) mit der Kernlegierung zu einem Paket zusammengesetzt und auf die Warmwalztemperatur angewärmt. Alternativ kann das Homogenisieren auch nach dem Paketbau erfolgen. Anschließend wird das angewärmte Paket warm und anschließend kalt an Enddicke gewalzt.

Bei den AA6xxx Werkstoffen erfolgt die Homogenisierung des Walzbarrens bei einer Temperatur von 500 °C bis 600 °C, bevorzugt 550 °C bis 580 °C, für mehr als eine Stunde. Das Warmwalzen erfolgt anders als in der eigenen internationalen Patentanmeldung WO 2013/037918 A1 ohne Warmbandabschreckung mit Aufwickeltemperaturen von 300 °C bis 400 °C und einer typischen Dicke von 5 bis 10 mm. Für Außenhautteile wird dann ein erstes Kaltwalzen auf 3 bis 4 mm durchgeführt mit anschließender Zwischenglühung, beispielsweise im Kammerofen mit einer Metalltemperatur von 370 °C bis 450 °C für mindestens 1h. Durch ein abschließendes Lösungsglühen an Enddicke bei einer typischen Temperatur von etwa 500 °C bis 570 °C mit nachfolgendem Abschrecken und Kaltauslagern etwa bei Raumtemperatur für mindestens drei Tage können die Bänder im Zustand T4 ausgeliefert werden. Optional werden die Bänder unmittelbar nach dem Abschrecken einer Wärmebehandlung unterzogen, um das Aushärteverhalten bei der kathodischen Tauchlackierung zu beschleunigen.

Bei den AlMg6-basierten Aluminiumverbundwerkstoffen werden Zwischenglühtemperaturen und Weichglühtemperaturen von 300 °C bis 500°C verwendet. Darüber hinaus müssen AlMg6-Werkstoffe keinen Abschreckvorgang durchlaufen, so dass das Schlussweichglühen im Kammerofen oder im Durchlaufofen erfolgen kann. Alternativ können AlMg6-basierten Aluminiumverbundwerkstoffe auch direkt als Warmband eingesetzt werden.

Als Werkstoffe kommen beispielsweise für die Kernlegierungsschicht die Aluminiumlegierungen AlMg6, AA6016, AA6014, AA6022, AA6451, und die AA6111 in Frage. Als äußere Aluminiumlegierungsschicht werden Aluminiumlegierungen vom AA8xxx, z.B. AA8011, AA8014, AA8021 und insbesondere AA8079, oder AA1050 verwendet.

Gemäß einer zweiten Lehre der vorliegenden Erfindung wird die oben aufgezeigte Aufgabe durch die Verwendung eines Aluminiumverbundwerkstoffs gelöst, welcher eine Kernlegierungsschicht aus einer Aluminiumlegierung vom Typ AlMg6 oder AA6xxx und mindestens eine ein- oder beidseitig vorgesehene, äußere Aluminiumlegierungsschicht aufweist, die im weich- oder lösungsgeglühten Zustand eine Dehngrenze $R_{p0,2}$ von 25 MPa bis 60 MPa mit einem Verhältnis der Fließspannungen im weich- oder lösungsgeglühten Zustand von

$k_{f,Außen}/k_{f,Kern} < 0,5$, bevorzugt $k_{f,Außen}/k_{f,Kern} < 0,4$ aufweist, der in einem Umformverfahren verwendet wird, bei welchem während der Umformung des Aluminiumverbundwerkstoffs an mindestens einer lokalen Position im Umformwerkzeug die Reibschubspannung $\tau_R$ zwischen dem Werkzeug und Aluminiumverbundwerkstoff in der Kontaktfläche die Schubfließspannung $k_{Außen}$ der äußeren Aluminiumlegierungsschicht erreicht wird und die Umformung einen Tief- und/oder Streckziehvorgang umfasst, wobei als Aluminiumkernlegierung eine Legierung vom Typ AA6xxx und als mindestens eine äußere Aluminiumlegierungsschicht eine Aluminiumlegierung vom Typ AA8xxx verwendet wird oder als Aluminiumkernlegierung eine Legierung vom Typ AlMg6 und als mindestens eine äußere Aluminiumlegierungsschicht eine Aluminiumlegierung vom Typ AA8079, AA1050, AA5005, AA5005A verwendet wird. Die Verwendung der Aluminiumverbundwerkstoffe in einem solchen Umformverfahren ermöglicht insbesondere die Bereitstellung von großflächigen, einteiligen Blechteilen für den Kraftfahrzeugbau, entweder als Außenhautteil mit einer AA6xxx Kernlegierung oder als nicht sichtbares Strukturteil mit einer AlMg6 Kernlegierung, die besonders hohe Umformgrade benötigen.

Schließlich wird die oben aufgezeigte Aufgabe gemäß einer dritten Lehre der vorliegenden Erfindung durch ein mit dem erfindungsgemäßen Verfahren umgeformtes, tief- und/oder streckgezogenes Strukturteil oder Außenhautteil eines Kraftfahrzeugs gelöst. Wie bereits ausgeführt, ermöglicht das erfindungsgemäße Verfahren großflächige Blechteile aus einem einzigen Aluminiumverbundwerkstoff bereitzustellen und weitere Arbeitsschritte, wie beispielsweise das Fügen von kleineren, zu einer Einheit zusammenzufügenden Bauteilen, zu vermeiden. Es können damit deutlich größere und aufwändiger umgeformte Bauteile zur Verfügung gestellt werden.

Das Blechteil ist hierbei ein Strukturteil oder ein Außenhautteil eines Kraftfahrzeugs. Beispielsweise kann das Blechteil ein komplexes Bodenblech einer Bodengruppe sein oder ein Seitentürinnenteil, beispielsweise wenn ein Aluminiumkern vom Typ AlMg6 verwendet wird. Außenhautteile wie Kotflügel, Motorhaube und insbesondere Seitenwände oder

- rahmen können mit einem Aluminiumverbundwerkstoff mit einer AA6xxx Kernlegierung bereitgestellt werden. Alle genannten Blechteile erfordern sehr hohe Umformgrade, welche mit dem erfindungsgemäßen Umformverfahren kombiniert mit den angegebenen Aluminiumverbundwerkstoffen erreicht werden können. Die Einsatzmöglichkeiten von Aluminiumwerkstoffen im Kraftfahrzeug können damit noch einmal gesteigert werden, da ein bisher nicht erreichtes Umformverhalten bei diesen Werkstoffen zur Verfügung gestellt wird.

Im Weiteren soll die Erfindung anhand von Ausführungsbeispielen in Verbindung mit der Zeichnung näher erläutert werden. Die Zeichnung zeigt in

Fig. 1       in einer schematischen, perspektivischen Schnittdarstellung das Kreuzwerkzeug zur Durchführung der Tiefziehversuche,

Fig. 2       in einer vereinfachten Explosionsdarstellung den Stempel, Niederhalter und Matrize des Kreuzwerkzeugs aus Fig. 1,

Fig. 3       in einem Diagramm die Stempelkraft abhängig vom Stempelweg des Kreuzwerkzeugs aus Fig. 1 einer monolithischen Variante vom Typ AA6016,

Fig. 4       das Diagramm aus Fig. 3 bei Durchführung eines Ausführungsbeispiels des erfindungsgemäßen Umformverfahrens,

Fig. 5       in einem Diagramm aus einem Zugversuch ermittelte Fließspannungen $k_f$ in Abhängigkeit von der Dehnung für die Werkstoffe AA6016, AA5005, AA6463A, AA8079, AA1050,

Fig. 6       die Fließspannungen der Aluminiumwerkstoffe AA1050, AA8079, AA6463A, AA5005 im Verhältnis zur Fließspannung der Aluminiumlegierung AA6016,

Fig. 7       in einem Diagramm die Fließspannungen des Werkstoffs AA8079 in Abhängigkeit von der Dehnung im Verhältnis zur Fließspannung verschiedener möglicher Kernlegierungen vom Typ AA 6xxx,

Fig. 8       in einem Diagramm Fließspannungen $k_f$ in Abhängigkeit von der Dehnung für die Werkstoffe AlMg6, AA1050, AA5005,

Fig. 9       in einem Diagramm die Fließspannungen der Werkstoffe AA1050, AA5005 in Abhängigkeit von der Dehnung im Verhältnis zur Fließspannung des Aluminiumwerkstoffs AlMg6,

Fig. 10, 11       zwei Ausführungsbeispiele erfindungsgemäßer Struktur- oder Außenhautteile.

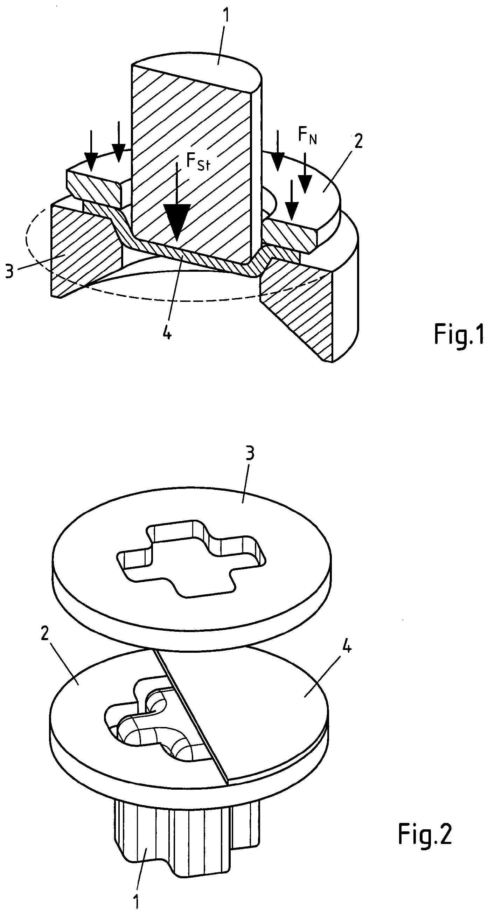

In Fig. 1 ist zunächst die Konfiguration des Kreuzwerkzeugs in einer perspektivischen Schnittansicht dargestellt, wobei das Kreuzwerkzeug einen Stempel 1, einen Niederhalter 2 sowie eine Matrize 3 umfasst. Das Blech 4, welches im Falle einer plattierten Variante beidseitig plattiert wurde, wies beispielsweise eine Dicke von 1,5 mm auf. Dies galt sowohl für die plattierte als auch die unplattierte Variante. Das als Ronde vorgesehene Blech wird durch die Stempelkraft $F_{St}$ tiefgezogen, wobei mit der Kraft $F_N$ der Niederhalter 2 und die Matrize 3 auf die Blechronde gedrückt wurden. Der kreuzförmige Stempel 1 hatte entlang der Achsen des Kreuzes jeweils eine Breite von 126 mm, wohingegen die Matrize eine Öffnungsbreite von 129,4 mm aufwies. Die Blechronde aus dem Aluminiumwerkstoff wies unterschiedliche Durchmesser auf. Begonnen wurde mit einem Rondendurchmesser von 195 mm.

In Fig. 2 ist noch mal in einer Explosionsansicht von unten der Stempel 1, der Niederhalter 2 sowie die Matrize 3 und das Blech 4 dargestellt. Mit dem Kreuzwerkzeug können Belastungen des Werkstoffs während industrieller Tiefziehversuche nachgeahmt werden und somit das Umformverhalten des zu testenden Werkstoffs überprüft werden. Dabei wurde der Stempel 1 mit einer Geschwindigkeit von 1,5 mm pro Sekunde in Richtung Blech abgesenkt und das Blech 4 entsprechend der Form des Stempels tiefgezogen. Die Stempelkraft und der Stempelweg bis zum Reißen der Probe wurden gemessen und aufgezeichnet.

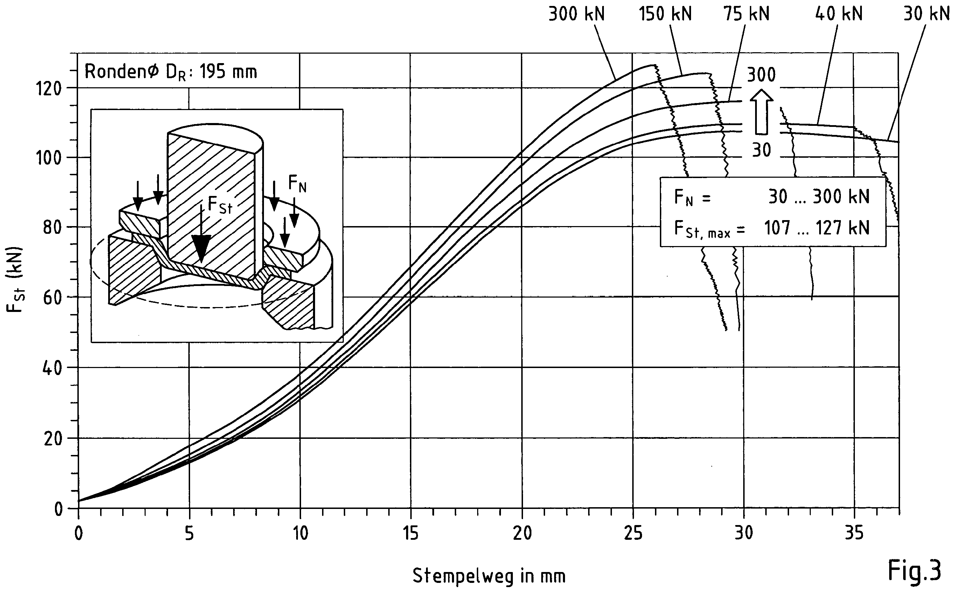

In Fig. 3 ist das Kraft-Weg-Diagramm der unplattierten Variante mit einem Aluminiumlegierungswerkstoff vom Typ AA6016 dargestellt. Zu erkennen ist, dass bei Steigerung der Niederhalterkräfte von 30 auf 300 kN die Stempelkraft bereits bei 23 mm Stempelweg auf einen Wert von mehr als 120 kN steigt. Je höher die Niederhalterkraft ist, desto früher steigt die Stempelkraft an. Es kommt bei etwa 26 mm Stempelweg und einer Niederhalterkraft von 300 kN zu einem Reißen des Werkstoffs, was das Umformvermögen der unplattierten Variante begrenzt. Wird die Niederhalterkraft verringert, erhöht sich der Stempelweg auf etwa 35 mm bei 75 kN Niederhalterkraft bis der Werkstoff reißt. Bei 30 kN kommt es zu keinem Reißen des Werkstoffes.

Anhand Fig. 3 lässt sich das konventionelle Verfahren zur Einstellung der Niederhalterkräfte und damit der Reibung im Tiefziehprozess ablesen. Der Fachmann wird versuchen, die Niederhalterkräfte so gering wie möglich zu halten, damit es nicht zu einem Reißen des Werkstoffes kommt. Andererseits wird der Fachmann bestrebt sein, die Niederhaltekräfte so einzustellen, dass es nicht zu einer Faltenbildung kommt. Der Umformprozess ist aber durch das Auftreten von Reißern bei gegebener Niederhalterkraft begrenzt.

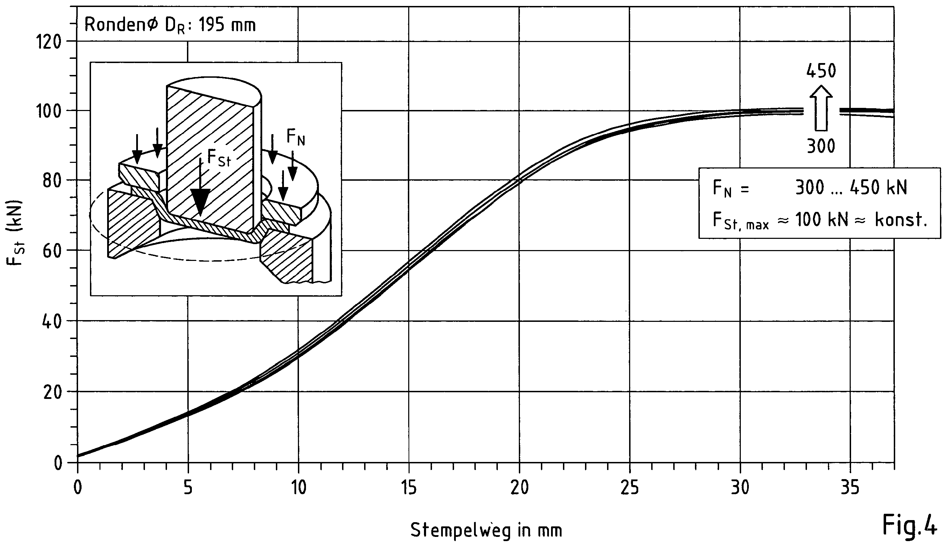

Fig. 4 zeigt nun das Kraft-Weg-Diagramm für die Stempelkraft gemäß einem Ausführungsbeispiel des erfindungsgemäßen Umformverfahrens, wobei der Blechwerkstoff eine beidseitig plattierte Variante vom Typ A2-K1-A2 ist. Die Zusammensetzung sowohl der in Fig. 3 dargestellten unplattierten Variante vom Typ AA6016 als auch der entsprechenden beidseitig plattierten Variante aus dem Diagramm in Fig. 4 sind in der Tabelle 1 dargestellt.

In Fig. 4 erkennt man, dass die Stempelkraft Fst auf maximal 100 kN begrenzt ist, unabhängig von der jeweiligen Niederhalterkraft $F_N$, welche von 300 bis 450 kN variiert wurde. Es zeigten sich keine Reißer bei dem erfindungsgemäßen Umformverfahren. Der Werkstoff konnte auch bei Niederhalterkräften von über 300 kN mit einem Stempelweg von mehr als 35 mm ohne Reißer tiefgezogen werden. Das bedeutet, dass während der Umformung die Reibschubspannung des Werkstoffs, welche der Stempelkraft Fst entgegen wirkt, begrenzt wird und zwar auf den Wert der Schubfließspannung der äußeren Aluminiumlegierungsschicht. Es kommt auch bei der maximalen Stempelkraft von 450 kN zu keinem Reißen des Aluminiumverbundwerkstoffs der Variante A2-K1-A2.

Die getesteten Aluminiumverbundwerkstoffe wurden wie folgt hergestellt:

Ein Walzbarren bestehend aus einer Aluminiumlegierung vom Typ AA 6016 mit der in Tabelle 1 angegebenen Zusammensetzung wurde gegossen, bei 580 °C für mehr als 2h homogenisiert und mit einem Plattierwerkstoff der Legierungen A1, A2, A3, A4 beidseitig belegt und anschließend walzplattiert. Dabei wurde das Warmband mit einer Dicke von 12 mm und einer Warmwalzendtemperatur von mindestens 300 °C gefertigt., Anschließend wurde das Warmband bei einer Bandtemperatur von 350 °C für mehr als 2h geglüht und an 4 mm kaltgewalzt. Zur Erzielung einer Außenhautqualität, d.h. zur Vermeidung des sogenannten Ropings, erfolgte bei dieser Dicke eine Zwischenglühung, wobei das Band eine Temperatur von etwa 350 °C für 2h aufwies. Anschließend wurde das Band aus dem Aluminiumverbundwerkstoff auf 1,5 mm Enddicke kalt gewalzt und einem Lösungsglühen bei 500 °C bis 570 °C mit Abschrecken unterzogen, so dass die Aluminiumlegierungsbänder mit der Kernlegierung K1 für die späteren Versuche im Zustand T4 nach Kaltauslagerung bei Raumtemperatur für ca. 2 Wochen vorlagen.

Die Aluminiumverbundwerkstoffe basierend auf einem AlMg6-Aluminiumkern wurden wie folgt hergestellt: Homogenisieren eines Barrens aus einer AlMg6-Legierung bei 500 °C bis 550°C für mehr als 2h, Aufbau des Plattierwalzbarrens durch beidseitiges Auflegen der Plattierwerkstoffe, anschließendes Walzplattieren auf 12 mm Dicke, Durchführen einer Warmbandglühung bei 350 °C für mehr als 2h, Kaltwalzen auf 4 mm Dicke, Zwischenglühen des Kaltbandes bei 350 °C für mehr als 2h und abschließendes Kaltwalzen auf 1,5 mm Enddicke. Anstelle des Lösungsglühens wurde ein Weichglühen im Kammerofen bei 350 °C für 2 Stunden am Ende des Herstellweges durchgeführt.

Tabelle 1

| Legierung | Bezeichnung | Si | Fe | Cu | Mn | Mg | Ti |
|---|---|---|---|---|---|---|---|
| AA 1050 | A1 | 0,046 | 0,32 | 0,0034 | 0,0057 | 0,0036 | 0,0149 |
| AA 8079 | A2 | 0,089 | 0,86 | 0,0019 | 0,021 | 0,0022 | 0,0061 |
| AA 6463A | A3 | 0,25 | 0,21 | 0,0014 | 0,078 | 0,34 | 0,016 |
| AA 5005 | A4 | 0,066 | 0,19 | 0,119 | 0,121 | 0,89 | 0,0039 |
|  |  |  |  |  |  |  |  |
| AA 6016 | K1 | 1,31 | 0,18 | 0,016 | 0,078 | 0,32 | 0,0166 |
| AlMg6 | K2 | 0,091 | 0,2 | 0,142 | 0,25 | 6,05 | 0,022 |

Die Tabelle 1 zeigt die unterschiedlichen Legierungsgehalte der wesentlichen Legierungsbestandteile in Gewichtsprozent. Alle sechs Legierungen weisen neben Aluminium und den angegebenen Legierungsbestandteilen Si, Fe, Cu, Mn, Mg und Ti Verunreinigungen auf, welche einzeln maximal 0,05 Gew.-% betragen und in Summe maximal 0,15 Gew.-%. Alle Angaben in Tabelle 1 verstehen sich selbstverständlich ebenfalls in Gew.-%.

In Tabelle 2 sind die gemessenen mechanischen Kennwerte der verwendeten Legierungstypen dokumentiert. Alle Angaben wurden im weich- oder lösungsgeglühten Zustand gemäß DIN EN ISO 6892-1:2009 ermittelt.

Tabelle 2

| Legierung | Bezeichnung | $R_{p0,2}$ | $R_m$ | $A_g$ | $A_g$ (gegl.) | $A_{80mm}$ | $A_{80mm}$ (Hand) | $n_{4-6}$-Wert | $r_{8-12}$-Wert |
|---|---|---|---|---|---|---|---|---|---|
|  |  | MPa | MPa | % | % | % | % |  |  |
| AA 1050 | A1 | 26 | 74 | 27,9 | 28,7 | 38,6 | 39,4 | 0,270 | 1,180 |
| AA 8079 | A2 | 29 | 81 | 31,1 | 31,4 | 46,0 | 46,9 | 0,253 | 0,685 |
| AA 6463A | A3 | 37 | 99 | 21,3 | 22,5 | 27,4 | 28,3 | 0,321 | 0,816 |
| AA 5005 | A4 | 45 | 113 | 24,7 | 24,0 | 30,2 | 31,1 | 0,243 | 0,941 |

(fortgesetzt)

| Legierung | Bezeichnung | $R_{p0,2}$ | $R_m$ | $A_g$ | $A_g$ (gegl.) | $A_{80mm}$ | $A_{80mm}$ (Hand) | $n_{4\text{-}6}$-Wert | $r_{8\text{-}12}$-Wert |
|---|---|---|---|---|---|---|---|---|---|
| | | MPa | MPa | % | % | % | % | | |
| | | | | | | | | | |
| AA 6016 | K1 | 114 | 219 | 24 | 23,8 | 29,5 | 29,8 | 0,277 | 0,729 |
| AlMg6 | K2 | 156 | 308 | 23 | 22,2 | 25,9 | 26,9 | 0,301 | 0,676 |

In einem weiteren Versuch wurden für verschiedene Legierungskombinationen die maximalen Niederhaltekräfte bei verändertem Rondendurchmesser ermittelt. Es zeigte sich, dass insbesondere bei der Variante A2-K1-A2, welche eine Aluminiumlegierung vom Typ AA6016 beidseitig plattiert mit einer Aluminiumlegierungsschicht vom Typ AA8079 darstellt, der Rondendurchmesser weiter vergrößert werden konnte und erst bei einem Rondendurchmesser von 205 mm und einer maximalen Niederhalterkraft von mehr als 105 kN Reißer auftraten. Bei Rondendurchmessern von 195 mm bzw. 200 mm konnte selbst bei der im Umformtest maximal möglichen Niederhalterkraft von 600 kN keine Reißer erzeugt werden. Da die monolithische Variante bereits bei einem Rondendurchmesser von 195 mm und einer maximalen Niederhalterkraft von 50 kN Reißer aufwies, stellt dies die exzellente Umformbarkeit der plattierten Variante in dem erfindungsgemäßen Umformverfahren unter Beweis. Die Ergebnisse des Kreuzwerkzeugsversuchs sind in Tabelle 3 zusammengefasst.

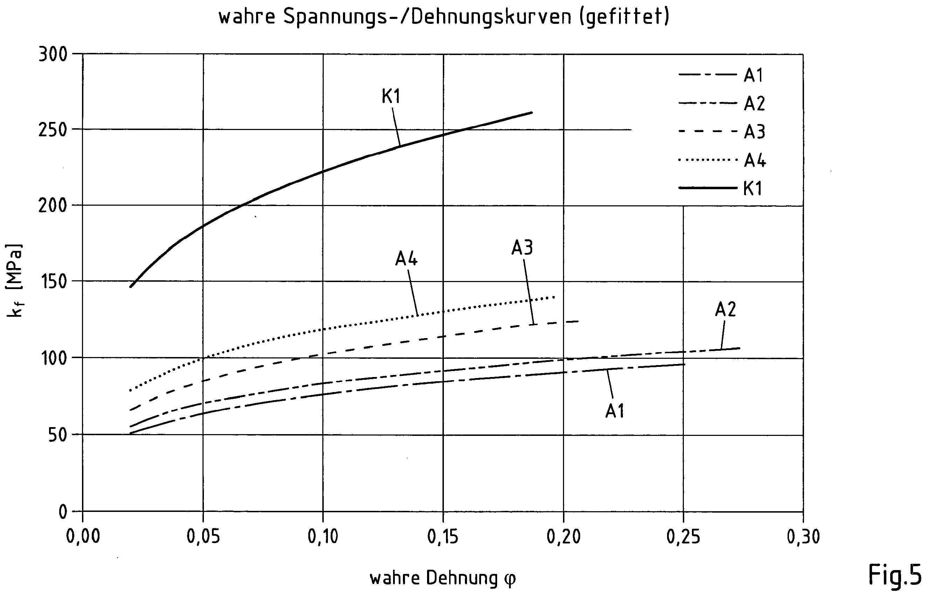

$R_{p0,2}$ entspricht dem Wert von $k_f$ bei 0,2% plastischer Dehnung und ist im Zugversuch messbar. In der Tabelle 3 ist zusätzlich das Verhältnis $k_{f,\text{Außen}}/k_{f,\text{Kern}}$ bei einer wahren Dehnung von ca. 0,025 eingetragen, welches aus den Fig. 5 bis 9 für die jeweilige Werkstoffkombination entnommen ist.

Tabelle 3

| Variante | Verhältnis $R_{p0,2\text{Außen}}/R_{p0,2,\text{Kern}}$ | Verhältnis $k_{f,\text{Außen}}/k_{f,\text{Kern}}$ (wahre Dehnung ca. 0,025) | | Max. Niederhalterkraft bei Rondendurchmesser | | |
|---|---|---|---|---|---|---|
| | | | | 195 mm | 200 mm | 205 mm |
| | | | | F(kN) | F(kN) | F(kN) |
| K1 unplattiert | - | - | Vgl. | 50 | | |
| A1-K1-A1 | 0,23 | 0,34 | Vgl. | 159 | | |
| A2-K1-A2 | 0,25 | 0,38 | Erf. | > 600 | > 600 | 105,0 |
| A3-K1-A3 | 0,32 | 0,46 | Vgl. | 130 | | |
| A4-K1-A4 | 0,39 | 0,53 | Vgl. | 60 | | |
| K2 unplattiert | - | - | Vgl. | 75 | | |
| A1-K2-A1 | 0,17 | 0,27 | Erf. | > 600 | | |
| A4-K2-A4 | 0,29 | 0,45 | Erf. | > 600 | | |

Die plattierten Aluminiumlegierungsvarianten A1-K1-A1 sowie die A3-K1-A3 zeigten ebenfalls eine deutliche Steigerung in Bezug auf die maximale Niederhalterkraft bei einem Rondendurchmesser von 195 mm. Im Vergleich zur unplattierten Variante K1 stieg die maximale Niederhalterkraft, welche bei der unplattierte Variante K1 50 kN betrug, um den Faktor 2,6 (Variante A3-K1-A3) bzw. um den Faktor 3,18 (Variante A3-K1-A3) an. Demgegenüber ermöglichte die Variante A4-K1-A4 keine signifikante Zunahme der maximalen Niederhalterkraft gegenüber der unplattierten Variante K1.

Die in den Fig. 5 bis 9 dargestellten Messwerte wurden durch Zugversuche quer zur Walzrichtung gemäß DIN EN ISO 6892-1:2009 ermittelt. Dargestellt ist die Fließspannung $k_f$ in Abhängigkeit der wahren Dehnung, wobei sich die wahre Dehnung wie folgt ergibt:

$$\varphi = \ln (1 + \varepsilon)$$

wobei $\varphi$ die wahre Dehnung und $\varepsilon$ die technische Dehnung bezeichnet.

Zur Erläuterung zeigt Fig. 5 Spannungs-Dehnungskurven für verschiedene Werkstoffe, wobei die Fließspannung $k_f$ gegenüber der wahren Dehnung $\varphi$ aufgetragen ist. In Fig. 5 ist zu erkennen, dass der Kernwerkstoff K1 eine deutlich höhere Fließspannung als die äußeren Plattierschichten A1, A2, A3 und A4 aufweist.

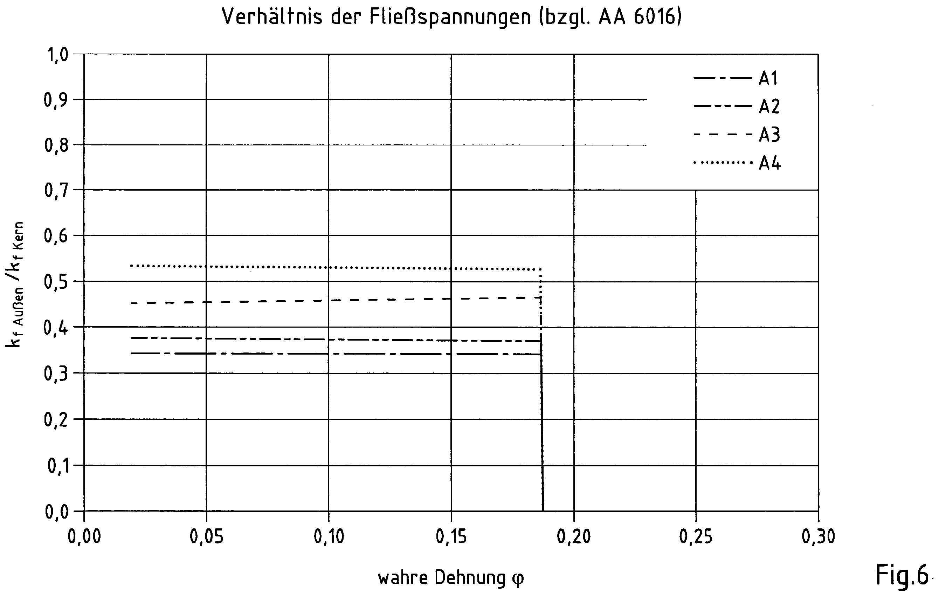

In Fig. 6 sind die Verhältnisse der Fließspannungen der äußeren Aluminiumlegierungsschichten im Verhältnis zur Fließspannung der Kernlegierungsschicht K1 dargestellt. Alle Varianten A1, A2 und A3 weisen ein Verhältnis von $k_{f,Außen}/k_{f,Kern}$ von weniger als 0,5 auf. Lediglich die Variante A4, eine äußere Aluminiumlegierungsschicht vom Typ AA5005, hat ein Fließspannungsverhältnis gegenüber einer Aluminiumlegierung vom Typ AA6016, welches größer als 0,5 ist.

Die gemessenen, maximalen Haltekräfte bei einem Rondendurchmesser von 195 mm zeigen, dass je weicher die äußere Aluminiumlegierungsschicht ist, desto größer werden die maximalen Niederhalterkräfte bei konstantem Rondendurchmesser. Da es sich bei dem Tiefziehversuch um eine plastische Verformung handelt, spielt aber auch die Verfestigung der äußeren Aluminiumlegierungsschicht eine Rolle.

Ein markanter Effekt im Hinblick auf die Vergrößerung der maximalen Niederhalterkraft kann im Vergleich der Varianten A1-K1-A1 und der A2-K1-A2 beobachtet werden. Von der Aluminiumlegierung vom Typ AA8079 ist bekannt, dass diese bei plastischer Dehnung eine relativ geringe Verfestigung aufweist. Dieser Effekt scheint die maximal erreichbaren Ergebnisse in den Kreuzwerkzeug-Versuchen zu begünstigen. Die Kombination einer Aluminiumlegierungsschicht vom Typ AA6016 mit einer Aluminiumlegierung AA8079, also die Variante A2-K1-A2 zeigten trotz einem größeren Fließspannungsverhältnis im Vergleich zur Variante A1-K1-A1 eine enorme Steigerung der Niederhaltekräfte auf über 600 kN selbst bei Vergrößerung des Rondendurchmessers auf 200 mm. Derzeit wird die Erklärung dieses Ergebnisses darin gesehen, dass die Verfestigung der äußeren Aluminiumlegierungsschicht vom Typ AA8079 geringer ist als die des Kernwerkstoffs während der plastischen Verformung und dass hierdurch das Fließen des Werkstoffs während des Umformvorgangs begünstigt wird.

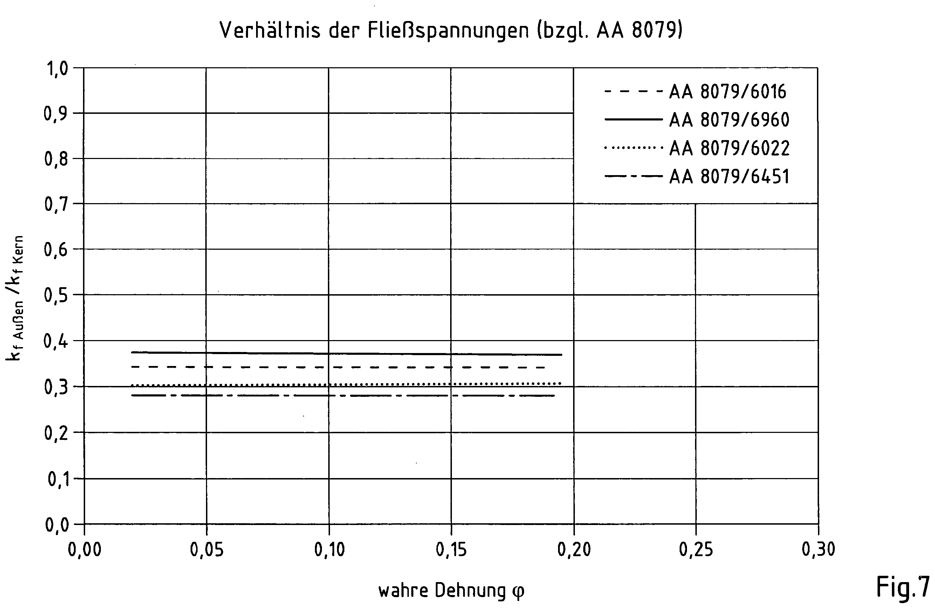

Fig. 7 zeigt die Verhältnisse der Fließspannungen $k_{f,Außen}$ einer äußeren Aluminiumlegierungsschicht vom Typ AA 8079 im Verhältnis zu den Fließspannungen verschiedener denkbarer Kernlegierungen vom Typ AA 6xxx. Alle Varianten weisen ein Verhältnis von $k_{f,Außen}/k_{f,Kern}$ von weniger als 0,5 auf. Damit steht zu erwarten, dass auch solche Kombinationen von im Automobilbereich etablierten AA 6xxx Kernlegierungen mit einer äußeren Aluminiumlegierungsschicht vom Typ AA 8079 die oben genannte markante Verbesserung der Umformbarkeit aufweisen.

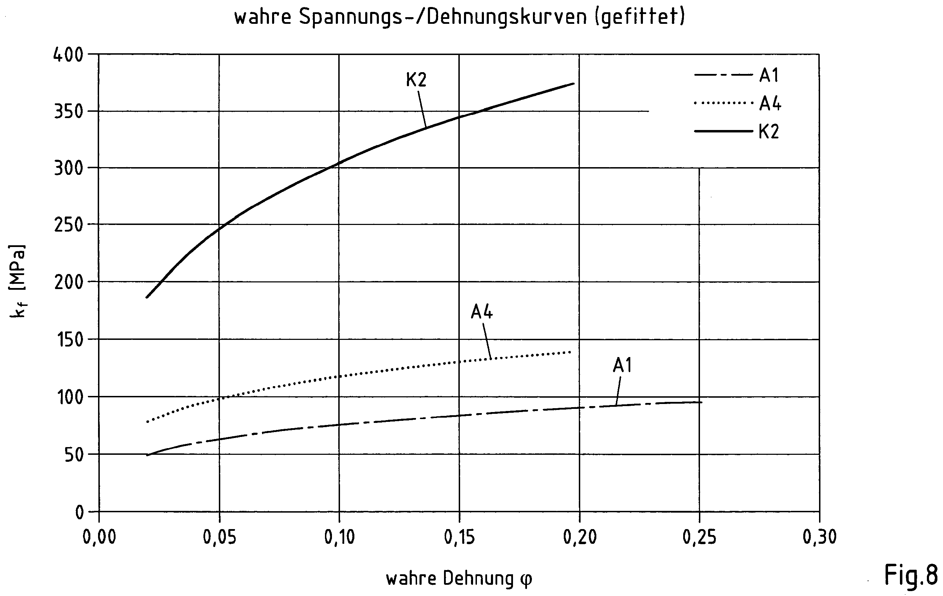

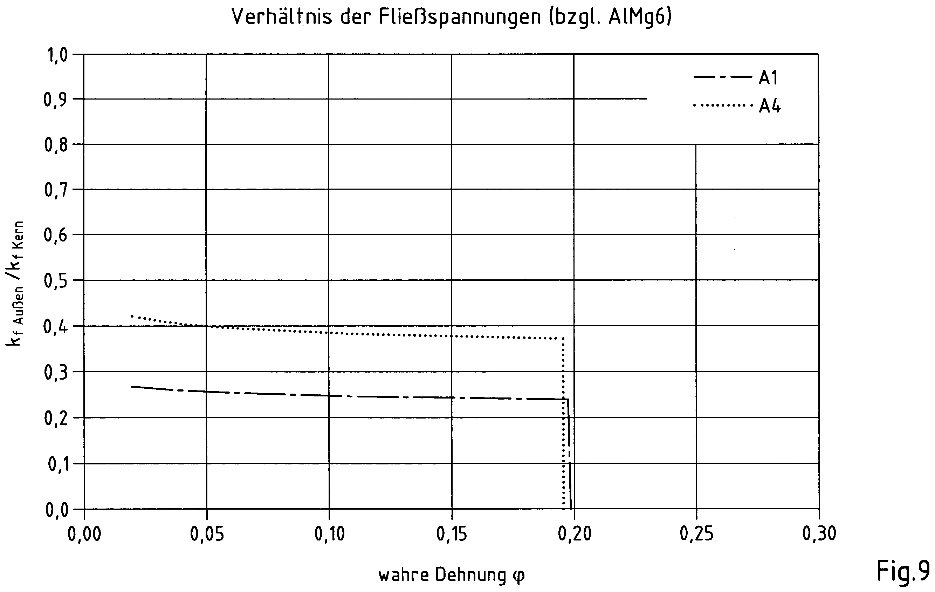

Ähnliche Ergebnisse konnten auch für eine andere Kernlegierung vom Typ AlMg6 erzielt werden, deren Spannungs-Dehnungskurven im Vergleich zu den Varianten A3 und A4 in Fig. 8 in einem Diagramm dargestellt sind. Fig. 9 zeigt wiederum das Verhältnis der Fließspannungen der äußeren Aluminiumlegierungsschichten A3 und A4 im Verhältnis zur Kernaluminiumlegierungsschicht vom Typ K2. Beide Aluminiumverbundwerkstoffe zeigten eine maximale Niederhalterkraft von mehr als 600 kN bei einem Rondendurchmesser von 195 mm, während der unplattierte Vergleichswerkstoff K2 bereits bei einem Rondendurchmesser von 195 mm und einer maximalen Niederhalterkraft von 75 kN Reißer zeigte.

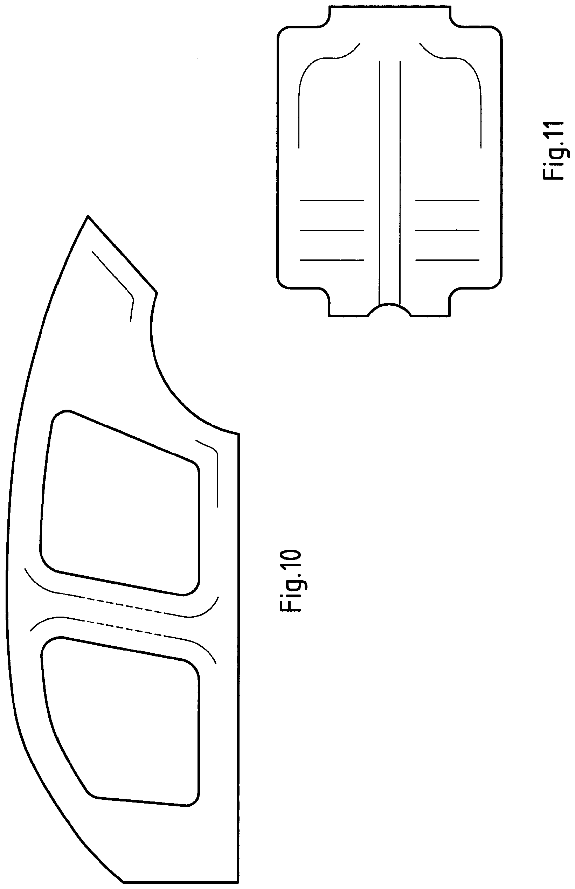

Aus diesen Ergebnissen wird deutlich, dass eine deutliche Steigerung des Umformverhaltens durch geschickte Wahl der Aluminiumkernlegierung und der äußeren Aluminiumlegierungsschicht ermöglicht wird. Die enormen Steigerungen in Bezug auf das Umformverhalten, welche durch Auswahl der Aluminiumverbundwerkstoffe in Verbindung mit dem erfindungsgemäßen Umformverfahren einhergehen, ermöglichen es, große Blechteile, wie beispielsweise das in Fig. 10 dargestellte Seitenwandteil eines Kraftfahrzeugs oder auch das in Fig. 11 exemplarisch dargestellte Bodenblech eines Kraftfahrzeugs einteilig aus einem Blech bestehend aus einem Aluminiumverbundwerkstoff umgeformt mit dem erfindungsgemäßen Verfahren bereitgestellt werden kann.

Bevorzugt nach dem erfindungsgemäßen Verfahren hergestellte Bauteile sind beispielsweise sichtbare Außenhautteile einer Karosserie eines Kraftfahrzeugs, insbesondere Seitenwandteile, Türaußenteile und Heckklappenaußenteile sowie Motorhauben etc. eines Kraftfahrzeugs, welche mit einer Aluminiumkernlegierung vom Typ AA6xxx hergestellt werden. Daneben werden bevorzugt alle anderen Struktur- und Fahrwerteile, wie Türinnenteile, Bodenbleche etc., die nicht sichtbar sind und ebenfalls sehr hohe Umformgrade für eine wirtschaftliche Fertigung benötigen, mit einer Aluminiumkernlegierung vom Typ A5xxx, beispielsweise mit einer AA5182-Aluminiumkernlegierung hergestellt.

**Patentansprüche**

1. Verfahren zum Umformen eines Aluminiumverbundwerkstoffs, welcher eine Kernlegierung aus einer Aluminiumlegierung vom Typ AlMg6 oder AA6xxx und mindestens eine ein- oder beidseitig vorgesehene, äußere Aluminiumlegierungsschicht aufweist, wobei der Aluminiumverbundwerkstoff in einem Umformwerkzeug umgeformt wird und die ein- oder beidseitige äußere Aluminiumlegierungsschicht eine Dehngrenze $R_{p0,2}$ im weich- oder lösungsgeglühten Zustand von 25 MPa bis 60 MPa aufweist,
**dadurch gekennzeichnet, dass**,
für die Fließspannungen der Aluminiumlegierungen des Kerns und der mindestens einen äußeren Schicht im weich- oder lösungsgeglühten Zustand gilt

$$k_{f,Außen}/k_{f,Kern} < 0,5,$$

während der Umformung des Aluminiumverbundwerkstoffs an mindestens einer lokalen Position im Umformwerkzeug die Reibschubspannung $\tau_R$ zwischen dem Werkzeug und Aluminiumverbundwerkstoff in der Kontaktfläche die Schubfließspannung $k_{Außen}$ der äußeren Aluminiumlegierungsschicht erreicht wird und die Umformung einen Tief- und/oder Streckziehvorgang umfasst, wobei als Aluminiumkernlegierung eine Legierung vom Typ AA6xxx und als mindestens eine äußere Aluminiumlegierungsschicht eine Aluminiumlegierung vom Typ AA8xxx verwendet wird oder als Aluminiumkernlegierung eine Legierung vom Typ AlMg6 und als mindestens eine äußere Aluminiumlegierungsschicht eine Aluminiumlegierung vom Typ AA8079, AA1050, AA5005, AA5005A verwendet wird.

2. Verfahren nach Anspruch 1,
   **dadurch gekennzeichnet, dass**
   mindestens eine äußere Aluminiumlegierungsschicht mit einer Dicke von 5 % bis 15 % des gesamten Aluminiumverbundwerkstoffes umgeformt wird.

3. Verfahren nach einem der Ansprüche 1 oder 2,
   **dadurch gekennzeichnet, dass**
   die Reibschubspannung $\tau_R$ während der Umformung durch eine Erhöhung der Flächenpressung zwischen Aluminiumverbundwerkstoff und Niederhalter vergrößert wird.

4. Verfahren nach einem der Ansprüche 1 bis 3,
   **dadurch gekennzeichnet, dass**
   eine Aluminiumkernlegierung vom Typ AA6xxx oder AlMg6, welche im lösungsgeglühten oder weichen Zustand eine Gleichmaßdehnung $A_g$ von mindestens 20 %, bevorzugt mindestens 22 % aufweist, umgeformt wird.

5. Verfahren nach Anspruch 4,
   **dadurch gekennzeichnet, dass**
   eine Aluminiumkernlegierung vom Typ AA6016 und mindestens eine äußere Aluminiumlegierungsschicht vom Typ AA8079 verwendet wird.

6. Verfahren nach einem der Ansprüche 1 bis 5,
   **dadurch gekennzeichnet, dass**
   ein Aluminiumverbundwerkstoff mit einer Aluminiumkernlegierung AA6xxx mit einer Dicke von 0,5 mm bis 2,0 mm, bevorzugt 0,7 mm bis 1,8 mm, besonders bevorzugt 0,8 mm bis 1,5mm oder ein Aluminiumverbundwerkstoff mit einer Aluminiumkernlegierung AlMg6 mit einer Dicke von 0,5 mm bis 3,5 mm, bevorzugt 1,0 mm bis 2,0 mm umgeformt wird.

7. Verwendung eines Aluminiumverbundwerkstoffs, welcher eine Kernlegierung aus einer Aluminiumlegierung vom Typ AlMg6 oder AA6xxx und mindestens eine ein- oder beidseitig vorgesehene, äußere Aluminiumlegierungsschicht aufweist, die ein- oder beidseitige äußere Aluminiumlegierungsschicht eine Dehngrenze $R_{p0,2}$ im weich- oder lösungsgeglühten Zustand von 25 MPa bis 60 MPa aufweist und für das Verhältnis der Fließspannungen der Aluminiumlegierungen des Kerns und der mindestens einen äußeren Schicht im weich- oder lösungsgeglühten Zustand gilt

$$k_{f,Außen}/k_{f,Kern} < 0,5$$

in einem Umformverfahren, bei welchem während der Umformung des Aluminiumverbundwerkstoffs an mindestens einer lokalen Position im Umformwerkzeug die Reibschubspannung $\tau_R$ zwischen dem Werkzeug und Aluminiumverbundwerkstoff in der Kontaktfläche die Schubfließspannung $k_{Außen}$ der äußeren Aluminiumlegierungsschicht erreicht wird und die Umformung einen Tief- und/oder Streckziehvorgang umfasst, wobei als Aluminiumkernlegierung eine Legierung vom Typ AA6xxx und als mindestens eine äußere Aluminiumlegierungsschicht eine Aluminiumlegierung vom Typ AA8xxx verwendet wird oder als Aluminiumkernlegierung eine Legierung vom Typ AlMg6 und als mindestens eine äußere Aluminiumlegierungsschicht eine Aluminiumlegierung vom Typ AA8079, AA1050, AA5005, AA5005A verwendet wird.

**8.** Tief- oder streckgezogenes Strukturteil oder Außenhautteil eines Kraftfahrzeugs umgeformt mit einem Verfahren nach einem der Ansprüche 1 bis 6.

## Claims

**1.** Method for forming an aluminium composite material which has a core alloy made from an aluminium alloy of type AA5xxx or AA6xxx and at least one outer aluminium alloy layer provided on one or both sides, wherein the aluminium composite material is formed in a forming tool and the outer aluminium alloy layer provided on one or both sides has a yield strength $R_{p0.2}$ of 25MPa to 60MPa in the soft or solution-annealed state,
**characterised in that**,

$$k_{f,outside}/k_{f,core} < 0.5$$

applies for the flow stresses of the aluminium alloys of the core and of the at least one outer layer in the soft or solution-annealed state, the frictional shear stress $\tau_R$ between the tool and the aluminium composite material in the contact surface reaches the shear flow stress $k_{outside}$ of the outer aluminium alloy layer at at least one local position in the forming tool during the formation of the aluminium composite material and the formation comprises a deep drawing and/or stretch forming procedure and wherein an alloy of type AA6xxx is used as an aluminium core alloy and an aluminium alloy of type AA8xxx is used as at least one outer aluminium alloy layer or an alloy of type AlMg6 is used as an aluminium core alloy and an aluminium alloy of type AA8079, AA1050, AA5005, AA5005A is used as at least one outer aluminium alloy layer.

**2.** Method according to claim 1,
**characterised in that**,
at least one outer aluminium alloy layer having a thickness of 5% to 15% of the total aluminium composite material is formed.

**3.** Method according to one of claims 1 or 2,
**characterised in that**,
the frictional shear stress $\tau_R$ is enlarged during the formation by an increase of the surface pressure between the aluminium composite material and the hold-down clamp.

**4.** Method according to one of claims 1 to 3,
**characterised in that**
an aluminium core alloy of type AA6xxx or AlMg6 is formed which has a uniform strain $A_g$ of at least 20%, preferably at least 22%, in the solution-annealed or soft state.

**5.** Method according to claim 4,
**characterised in that**,
an aluminium core alloy of type AA6016 and at least one outer aluminium alloy layer of type AA8079 is used.

**6.** Method according to one of claims 1 to 5,
**characterised in that**,
an aluminium composite material having an AA6xxx aluminium core alloy having a thickness of 0.5mm to 2.0mm, preferably 0.7mm to 1.8mm, particularly preferably 0.8mm to 1.5mm, or an aluminium composite material having an AlMg6 aluminium core alloy having a thickness of 0.5mm to 3.5mm, preferably 1.0mm to 2.0mm is formed.

**7.** Use of an aluminium composite material which has a core alloy made from an aluminium alloy of type AlMg6 or AA6xxx and at least one outer aluminium alloy layer provided on one or both sides, the outer aluminium alloy layer on one or both sides has a yield strength $R_{p0.2}$ of 25 MPa to 60MPa in the soft or solution-annealed state and

$$K_{f,outside}/k_{f,core} < 0.5$$

applies for the ratio of the flow stresses of the aluminium alloys of the core and of the at least one outer layer in the soft or solution-annealed state, in a forming process, wherein the frictional shear stress $\tau_R$ between the tool and the aluminium composite material in the contact surface reaches the shear flow stress $k_{outside}$ of the outer aluminium alloy layer at at least one local position in the forming tool during the formation of the aluminium composite material and the formation comprises a deep drawing and/or stretch forming procedure; wherein an alloy of type AA6xxx is used as an aluminium core alloy and an aluminium alloy of type AA8xxx is used as at least one outer aluminium alloy layer or an alloy of type AlMg6 is used as an aluminium core alloy and an aluminium alloy of type AA8079, AA1050, AA5005, AA5005A is used as at least one outer aluminium alloy layer.

8. Deep drawn or stretch formed structural part or outer skin part of a motor vehicle formed with a method according to one of claims 1 to 6.


**Revendications**

1. Procédé de formage d'un matériau composite à base d'aluminium, lequel possède un alliage de noyau en un alliage d'aluminium de type AlMg6 ou AA6xxx et au moins une couche en alliage d'aluminium extérieure, présente sur un ou les deux côtés, le matériau composite à base d'aluminium étant formé dans un outil de formage et la couche en alliage d'aluminium extérieure présente sur un ou les deux côtés présentant une limite d'élasticité $R_{p0,2}$ à l'état recuit d'adoucissement ou de mise en solution de 25 MPa à 60 MPa,
   **caractérisé en ce que**
   la relation suivante s'applique aux contraintes d'écoulement des alliages d'aluminium du noyau et de l'au moins une couche extérieure à l'état recuit d'adoucissement ou de mise en solution :

$$k_{f,Extérieure}/K_{f,Noyau} < 0,5,$$

   pendant le formage du matériau composite à base d'aluminium, en au moins une position locale dans l'outil de formage, la contrainte de cisaillement par frottement $\tau_R$ entre l'outil et le matériau composite à base d'aluminium atteint la contrainte d'écoulement de cisaillement $k_{Extérieure}$ de la couche en alliage d'aluminium extérieure dans la surface de contact et le formage comporte une opération d'emboutissage et/ou d'étirage sur forme, l'alliage de noyau à base d'aluminium utilisé étant un alliage du type AA6xxx et l'au moins une couche en alliage d'aluminium extérieure un alliage d'aluminium de type AA8xxx, ou alors l'alliage de noyau à base d'aluminium utilisé étant un alliage du type AlMg6 et l'au moins une couche en alliage d'aluminium extérieure utilisée étant un alliage d'aluminium de type AA8079, AA1050, AA5005, AA5005A.

2. Procédé selon la revendication 1,
   **caractérisé en ce**
   **qu'**au moins une couche en alliage d'aluminium extérieure est formée avec une épaisseur de 5 % à 15 % de la totalité du matériau composite à base d'aluminium.

3. Procédé selon la revendication 1 ou 2,
   **caractérisé en ce que**
   la contrainte de cisaillement par frottement $\tau_R$ est augmentée pendant le formage par une augmentation de la pression de surface entre le matériau composite à base d'aluminium et un serre-flan.

4. Procédé selon l'une des revendications 1 à 3,
   **caractérisé en ce**
   **qu'**un alliage de noyau à base d'aluminium de type AA6xxx ou AlMg6, lequel présente à l'état recuit de mise en solution ou doux un allongement avant striction $A_g$ d'au moins 20 %, de préférence d'au moins 22 %, est formé.

5. Procédé selon la revendication 4,

**caractérisé en ce**
**qu'**un alliage de noyau à base d'aluminium de type AA6016 et au moins une couche en alliage d'aluminium extérieure de type AA8079 sont utilisés.

6. Procédé selon l'une des revendications 1 à 5,
**caractérisé en ce**
**qu'**un matériau composite à base d'aluminium comprenant un alliage de noyau à base d'aluminium AA6xxx ayant une épaisseur de 0,5 mm à 2,0 mm, de préférence de 0,7 mm à 1,8 mm, notamment de préférence de 0,8 mm à 1,5 mm, ou un matériau composite à base d'aluminium comprenant un alliage de noyau à base d'aluminium $AlMg_6$ ayant une épaisseur de 0,5 mm à 3,5 mm, de préférence de 1,0 mm à 2,0 mm, est formé.

7. Utilisation d'un matériau composite à base d'aluminium, lequel possède un alliage de noyau en un alliage d'aluminium de type AlMg6 ou AA6xxx et au moins une couche en alliage d'aluminium extérieure, présente sur un ou les deux côtés, la couche en alliage d'aluminium extérieure sur un ou les deux côtés présentant une limite d'élasticité $R_{p0,2}$ à l'état recuit d'adoucissement ou de mise en solution de 25 MPa à 60 MPa et la relation suivante s'applique au rapport entre les contraintes d'écoulement des alliages d'aluminium du noyau et de l'au moins une couche extérieure à l'état recuit d'adoucissement ou de mise en solution :

$$k_{f,\text{Extérieure}}/K_{f,\text{Noyau}} < 0,5$$

dans un procédé de formage, selon lequel, pendant le formage du matériau composite à base d'aluminium, en au moins une position locale dans l'outil de formage, la contrainte de cisaillement par frottement $\tau_R$ entre l'outil et le matériau composite à base d'aluminium atteint la contrainte d'écoulement de cisaillement $k_{\text{Extérieure}}$ de la couche en alliage d'aluminium extérieure dans la surface de contact et le formage comporte une opération d'emboutissage et/ou d'étirage sur forme, l'alliage de noyau à base d'aluminium utilisé étant un alliage du type AA6xxx et l'au moins une couche en alliage d'aluminium extérieure un alliage d'aluminium de type AA8xxx, ou alors l'alliage de noyau à base d'aluminium utilisé étant un alliage du type $AlMg_6$ et l'au moins une couche en alliage d'aluminium extérieure utilisée étant un alliage d'aluminium de type AA8079, AA1050, AA5005, AA5005A.

8. Pièce structurée emboutie ou étirée sur forme ou pièce d'enveloppe d'un véhicule automobile, formée avec un procédé selon l'une des revendications 1 à 6.

Fig.1

Fig.2

Fig.3

Fig.4

EP 2 914 391 B1

Fig.5

Verhältnis der Fließspannungen (bzgl. AA 6016)

wahre Dehnung φ

Fig.6

EP 2 914 391 B1

Verhältnis der Fließspannungen (bzgl. AA 8079)

Legend:
- - - - AA 8079/6016
—— AA 8079/6960
········· AA 8079/6022
—·— AA 8079/6451

y-axis: $k_{f\ Außen} / k_{f\ Kern}$

x-axis: wahre Dehnung $\varphi$

Fig.7

EP 2 914 391 B1

wahre Spannungs-/Dehnungskurven (gefittet)

Fig.8

EP 2 914 391 B1

Verhältnis der Fließspannungen (bzgl. AlMg6)

Fig.9

Fig.11

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013037918 A1

- US 6224992 B1